# EUROPEAN PATENT SPECIFICATION

(11) **EP 3 182 534 B1**
(45) Date of publication and mention of the grant of the patent: **19.02.2020**
(21) Application number: 15199940.6
(22) Date of filing: 14.12.2015
(51) Int. Cl.: H01T 13/54, F02M 57/06

(54) **PRE-CHAMBER SPARK PLUG**
VORKAMMERZÜNDKERZE
BOUGIE D'ALLUMAGE À PRÉCHAMBRE

(43) Date of publication of application: 21.06.2017
(73) Proprietor: Caterpillar Energy Solutions GmbH, 68167 Mannheim (DE)
(72) Inventor: SCHÄFER, Friedrich, 67480 Edenkoben (DE); STELLWAGEN, Karl, 67227 Frankenthal (DE)
(74) Representative: BRP Renaud & Partner mbB Rechtsanwälte Patentanwälte Steuerberater

(56) References cited:
- DE-B4-102013 210 125
- US-A- 4 061 114

## Description

### Technical Field

The present disclosure generally relates to an internal combustion engine. More particularly, the present disclosure relates to a pre-chambers spark plug for a gaseous fuel internal combustion engine, and a cylinder head with a pre-chamber spark plug for a gaseous fuel internal combustion engine.

### Background

Gaseous fuel internal combustion engines powered with a lean mixture of gaseous fuel and air may comprise a pre-combustion chamber (also referred to as pre-chamber) per cylinder for ignition purposes. Particularly, large-bore engines may benefit from those pre-chambers as it is otherwise difficult to consistently achieve complete and thorough combustion using lean fuel air mixtures.

For example, such a pre-chamber may be combined with a spark plug to form an integral unit called pre-chamber spark plug. The pre-chamber of the pre-chamber spark plug is fluidly connected to a main combustion chamber of a respective cylinder via at least one flow transfer channel that allow a flow of the lean mixture of gaseous fuel and air from the main combustion chamber into the pre-chamber during a compression stroke. The lean mixture within the pre-chamber may be enriched by supplying a small quantity of (gaseous) fuel into the pre-chamber via a separate fuel feed passage, for example during the intake stroke. The enriched mixture is ignited in the pre-chamber by a spark generated by electrodes of the pre-chamber spark plug that reach into the pre-chamber. The ignition of the enriched mixture causes a flame front of hot gases that propagates from the pre-chamber via the flow transfer channels into the main combustion chamber. Thus, the lean mixture in the main combustion chamber ignites and burns, and thereby, expands against a movable piston that drives a crankshaft.

For example, DE 10 2013 210 125 B4 discloses a pre-chamber spark plug. The pre-chamber spark plug includes a valve device including a piezo actuator and a blocking member for dosing fuel into the pre-chamber. The valve device is arranged in the vicinity of the pre-chamber.

US 4 061 114 A discloses a pre-chamber spark plug for an internal combustion engine, the pre-chamber spark plug extending along a first longitudinal axis. This known pre-chamber spark plug comprises a pre-chamber having a maximum pre-chamber height measured along the first longitudinal axis, a spray pump mechanism including a piston which is movable, the spay pump mechanism being arranged in a distance to the pre-chamber, the distance being at least three times greater than the maximum pre-chamber height. A first fuel supply channel fluidly connects the spray pump mechanism and the pre-chamber.

The present disclosure is directed, at least in part, to improving or overcoming one or more aspects of prior systems.

### Summary of the Disclosure

In one aspect, the present disclosure relates to a pre-chamber spark plug for a gaseous fuel internal combustion engine. The pre-chamber spark plug extends along a first longitudinal axis and may comprise a pre-chamber having a maximum pre-chamber height measured along the first longitudinal axis. The pre-chamber spark plug comprises a fuel valve arranged in a distance to the pre-chamber. The distance is at least three times greater than the maximum pre-chamber height. The pre-chamber spark plug comprises a first fuel supply channel fluidly connecting the fuel valve and the pre-chamber, and a tip housing portion and a rear housing portion. The tip housing portion includes the pre-chamber, and the first longitudinal axis extends from the tip housing portion to the rear housing portion. A mounting sleeve extends circumferentially about the first longitudinal axis from the tip housing portion to the rear housing portion.

In another aspect, the present disclosure relates to a cylinder head for a gaseous fuel internal combustion engine. The cylinder head includes a cylinder head body accommodating a pre-chamber spark plug as disclosed herein, and a third fuel supply channel extending through the cylinder head body to a second fuel supply ring channel disposed between the cylinder head body and the pre-chamber spark plug.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a cut view through a section of a cylinder head and a pre-chamber spark plug according to an embodiment of the present disclosure;
Fig. 2 shows a detailed view of a cut view through a tip portion of the pre-chamber spark plug as shown in Fig. 1;
Fig. 3 shows a detailed view of a cut view through a rear portion of the pre-chamber spark plug as shown in Fig. 1;
Fig. 4 shows a cut view through the rear portion of the pre-chamber spark plug along the lines C-C shown in Fig. 3; and
Fig. 5 shows a detailed view of a cut view through a tip portion of a pre-chamber spark plug of another embodiment according to the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a close arrangement of a fuel valve and a pre-chamber within a pre-chamber spark plug may promote a component failure of the fuel valve. The reason is that the fuel valve may be sensitive to heat, and therefore, may be subject to an increased wear due to heat generated during the ignition and combustion in the pre-chamber and the main combustion chamber of the internal combustion engine. Accordingly, herein it is suggested to arrange the fuel valve in a safety distance to the pre-chamber to ensure that the fuel valve this positioned in a region of the pre-chamber spark plug having a temperature being substantially lower than within and around the pre-chamber.

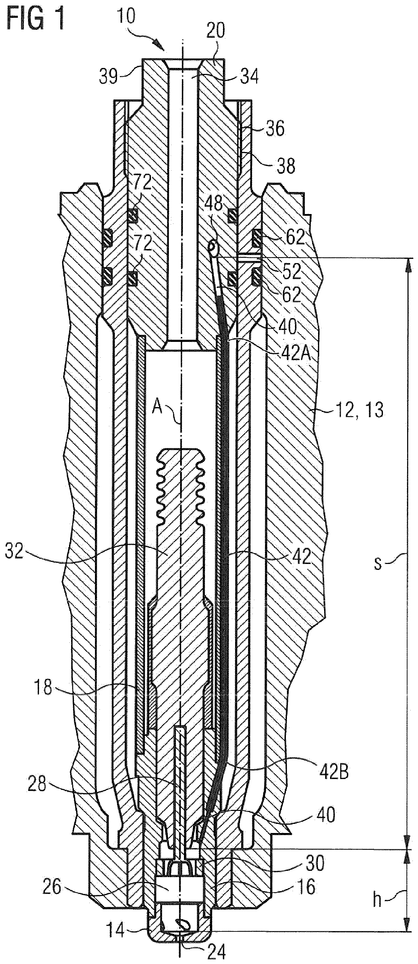

Referring to Fig. 1, an exemplary embodiment of a pre-chamber spark plug 10 according to the present disclosure accommodated in a cylinder head 12 is shown.

The pre-chamber spark plug 10 extends along a first or pre-chamber spark plug longitudinal axis A, and includes a pre-chamber cap 14, a tip or front housing portion 16, an intermediate housing portion 18, a rear housing portion 20, and a mounting sleeve 22.

The pre-chamber cap 14 includes at least one of flow transfer channel 24 fluidly connecting a pre-chamber 26 of the pre-chamber spark plug 10 with an exterior of the pre-chamber spark plug 10. In other words, the flow transfer channels 24 fluidly connect the pre-chamber 26 and a main combustion chamber of the internal combustion engine.

For the purpose of describing exemplary embodiments of the present disclosure, the internal combustion engine is considered as a four-stroke large-bore internal combustion engine operating at least partly on gaseous fuel such as a gaseous fuel engine or a dual fuel engine. Such a marine or stationary large-bore engine may have a bore diameter of 130 mm or greater. One skilled in the art will appreciate, however, that the internal combustion engine may be any type of engine (turbine, gas, diesel, natural gas, propane, two-stroke, etc.) that would utilize the pre-chamber spark plug as disclosed herein. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The pre-chamber 26 is defined by inner faces of the pre-chamber cap 14 and the tip housing portion 16. A center electrode 28 reaches into the pre-chamber 26 for generating a spark between the center electrode 28 and a ground electrode 30 circumferentially extending about a tip of the center electrode 28. The center electrode 28 reaches into an insulator 32 which may be made of a ceramic material.

The intermediate housing portion 18 is interconnected between the tip housing portion 16 and the rear housing portion 20, and accommodates part of the insulator 32. In the shown embodiment, the intermediate housing portion 18 is formed as a tube section extending circumferentially about the first longitudinal axis A.

The rear housing portion 20 includes an inner channel 34 for the connection lines (not shown) to the center electrode 28. The rear housing portion 20 includes an external thread 36 that engages with an internal thread 38 of the mounting sleeve 22. Thus, it is possible, to screw an assembly including the tip housing portion 16, the intermediate housing portion 18, and the rear housing portion 20 into the mounting sleeve 22.

To ease screwing of the rear housing portion 20 into the mounting sleeve 22, the rear housing portion 20 may include a tool engagement section 39 at a back end thereof (opposite the intermediate housing portion 18). For example, the tool engagement section 39 may be configured as an external hex or hexagonal head.

The mounting sleeve 22 is installed in the cylinder head 12, and is configured for receiving the tip housing portion 16, the intermediate housing portion 18, and the rear housing portion 20.

The pre-chambers spark plug 10 further includes a first fuel supply channel 40 opening in the pre-chamber 26 for supplying (gaseous) fuel. In the shown embodiment, the first fuel supply channel 40 extends from the rear housing portion 20 through the intermediate housing portion 18 to the tip housing portion 16.

The first fuel supply channel 40 includes a capillary tube 42 with a reduced diameter. The capillary tube 42 may be secured in the first fuel supply channel 40 by soldering, welding, clamping, bonding, and/or any other suitable securing process known in the art.

The capillary tube 42 with its reduced flow cross sectional area reduces a volume of the first fuel supply channel 40 such that the first fuel supply channel 40 guides a limited amount of fuel only. This configuration increases a fuel dosing accuracy, while allowing to arrange a fuel dosing valve 48 far away from the pre-chamber 26 as is described in greater detail later on.

Furthermore, the capillary tube 42 functions as a flame arrester to prevent a flame front from the pre-chamber 26 to propagate in direction to the fuel valve 48. For example, the capillary tube 42 may have an inner diameter between 0,3 mm and 0,8 mm.

The reduced flow cross sectional area of the capillary tube 42 may further have a dampening effect for dampening the influence of peak pressures in the pre-chamber 26 (and the main combustion chamber) onto the fuel valve 48. In some embodiments, the capillary tube 42 may be formed to include bends 42A, 42B which may further increase the dampening effect provided by the capillary tube 42.

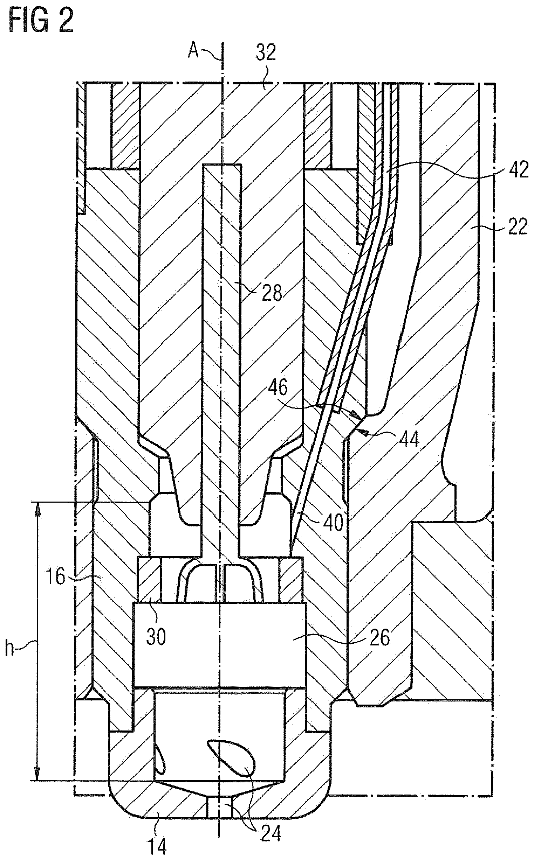

Turning to Fig. 2, a detailed view of the tip housing portion 16 of the embodiment shown in Fig. 1 is depicted.

As can be seen, the tip housing portion 16 includes a circumferential conical sealing face or seat 44 in sealing engagement with a matching circumferential conical sealing face or seat 46 of the mounting sleeve 22 to form a conical sealing seat for the tip housing portion 16 inside of the mounting sleeve 22. Alternatively, a flat sealing seat between the tip housing portion 16 and the mounting sleeve 22 may be possible as well.

It is noted that the sealing seat 44 of the pre-chamber spark plug 10 is positioned in a region of the tip housing portion 16, whereas the external thread 36 for securing the pre-chamber spark plug 10 is positioned in a region of the rear housing portion 20 (see Fig. 1). By arranging the external thread 36 "behind" the sealing seat 44 with respect to the main combustion chamber, a formation of deposits on the external thread 36 can be prevented. That is, in some embodiments, the external thread 36 may be disposed in a distance to the pre-chamber 26 greater than a distance between the sealing seat 44 and the pre-chamber 26 measured along the first longitudinal axis A.

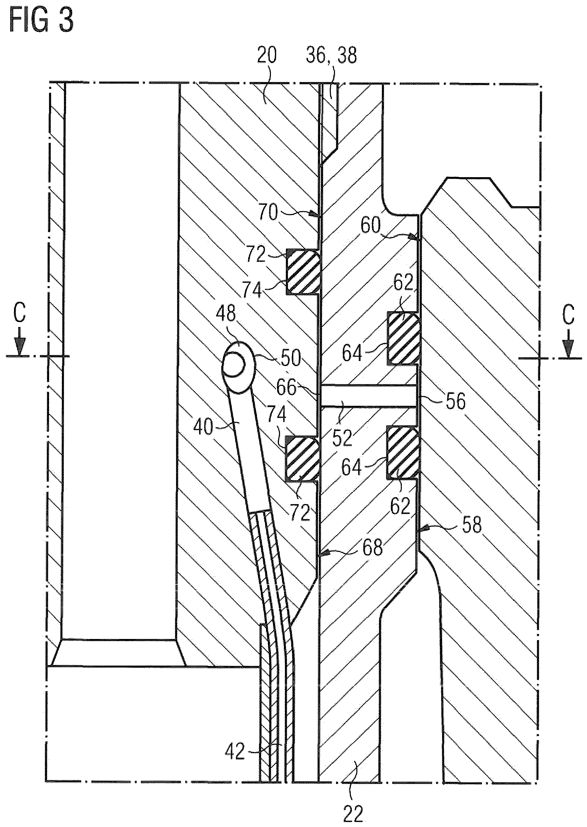

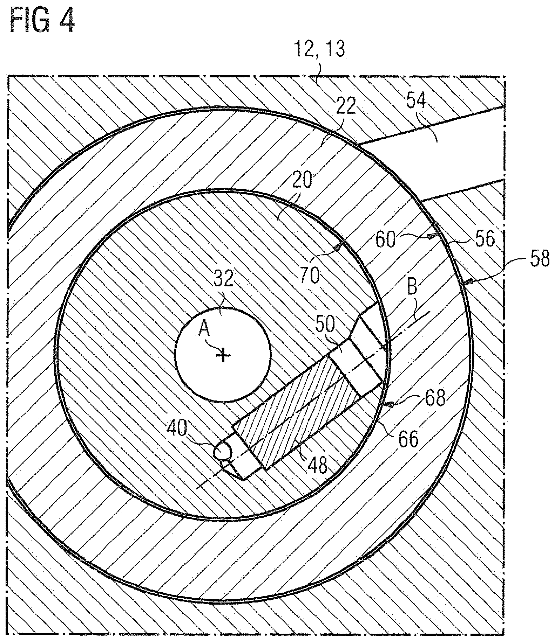

Referring to Figs. 3 and 4, Fig. 3 shows a detailed view of the rear housing portion 20 of the embodiment of Fig. 1. Furthermore, Fig. 4 shows a cut view along lines C-C in Fig. 3.

As can be seen, the fuel valve 48 (schematically shown only) is integrated in the rear housing portion 20. The fuel valve 48 is accommodated in a fuel valve reception 50 that extends along a fuel valve (reception) or second longitudinal axis B. The first fuel supply channel 40 opens in the fuel valve reception 50 to fluidly interconnect the fuel valve reception 50 (and the fuel valve 48) and the pre-chamber 26 via the capillary tube 42 (see Figs 1 and 2).

For example, the fuel valve reception 50 may be formed as a bore extending along the second longitudinal axis A into the rear housing portion 20 from an outer circumferential face 68 of the rear housing portion.

The fuel valve 48 is configured for dosing (gaseous) fuel into the first fuel supply channel 40. For example, the fuel valve 48 may be a check valve that includes an inner channel being sealable by a ball urged into a sealing position by a spring. The fuel valve 48 may open against the spring force of the spring if a gas feed pressure is higher than a pressure in the pre-chamber 26 (and main combustion chamber), for example during an intake stroke.

In the shown embodiment, the second longitudinal axis B lies in a plane perpendicular to the first longitudinal axis A. Thus, the second longitudinal axis B is non-parallel to the first longitudinal axis A, and the first and second longitudinal axes A and B run as skew lines with respect to each other. In other embodiments, the first and second longitudinal axes A and B may be inclined to with respect to each other.

Said spatial relationship between the second longitudinal axis B (and thus the fuel valve 48) and the first longitudinal axis A may increase safety. Particularly, in emergency situations, the fuel valve 48 may be not unintentionally ejected in a direction that facilitates leaving the cylinder head 12 so that technicians and parts of the machine can be damaged. Instead, in case of an unintentional ejection of the fuel valve 48 due to a too high pressure acting on the same from the pre-chamber 26 (and the main combustion chamber), the fuel valve 48 is ejected against the mounting sleeve 22 and/or the cylinder head 12 which prevents the fuel valve 48 from leaving the cylinder head 12.

A second fuel supply channel 52 extends through the mounting sleeve 22, for example in a direction perpendicular to the first longitudinal axis A as depicted in Fig. 3. Additionally, a third fuel supply channel 54 extends through the cylinder head 12, particularly a cylinder head body 13 of the cylinder head 12, until a fuel supply port (not shown) at a periphery of the cylinder head 12, which may be accessible by a service technician for connecting a (gaseous) fuel source to the fuel supply port.

The third fuel supply channel 54 and the second fuel supply channel 52 are fluidly interconnected by a fuel supply ring channel 56 extending circumferentially about the first longitudinal axis A between an outer circumferential face 58 of the mounting sleeve 22 and an inner circumferential face 60 of the cylinder head 12, particularly the cylinder head body 13. Two sealing rings 62 are provided in respective sealing ring recesses 64 of the mounting sleeve 22 to provide a fluid tight seal for the fuel supply ring channel 56.

Similarly, the second fuel supply channel 52 and the first fuel supply channel 40 together with the fuel valve reception 50 are fluidly interconnected by a further fuel supply ring channel 66. The further fuel supply ring channel 66 extends circumferentially about the first longitudinal axis A between an outer circumferential face 68 of the rear housing portion 20 and an inner circumferential face 70 of the mounting sleeve 22. Again, two sealing rings 72 are provided in respective sealing ring the recesses 74 of the rear housing portion 20 to provide a fluid tight seal for the further fuel supply ring channel 66. In some embodiments, mounting sleeve 22 may include recesses 74 for the sealing rings 72.

Since the ring channels 56 and 66 have a relatively large volume due to their ring form, a width of the ring channels 56 and 66 measured in a radial direction of the first longitudinal axis A can be chosen relatively small, for example within a range between 0,05 mm and 0,5 mm.

It is noted that the fuel supply ring channels 56 and 66 are provided in a considerable distance to the pre-chamber 26 (see Fig. 1). As a result, the fuel supply ring channels 56 and 66 are positioned far away from a high temperature zone generated by the pre-chamber 26 (and the main combustion chamber). That spaced apart arrangement allows to configure the sealing rings 62, 72 as O-rings, without the need to implement complex and costly sealing rings withstanding also high temperatures. For example, a temperature in the high temperature zone may be up to 400°C during operation of the internal combustion engine, whereas a temperature in a region of the sealing rings 62, 72 shown in the embodiment may be up to 90°C only during operation.

For the same reason, the fuel valve 48 is arranged in a distance to the pre-chamber 26. It was found that a close arrangement of the fuel valve 48 and the pre-chamber 26 may accelerate component wear of the fuel valve 48, and eventually lead to a component failure of the fuel valve 48, due to a high temperature impact from the pre-chamber 26 and the main combustion chamber.

Particularly it was found, that a distance s (see Fig. 1) between the fuel valve 48 (the fuel valve reception 50) and the pre-chamber 26 may be at least three times, particularly four times, a maximum height h (see Figs. 1 and 2) of the pre-chamber 26 measured along the first longitudinal axis A to considerably reduce the temperature impact from the pre-chamber 26 onto the fuel valve 48. As one skilled in the art will appreciate, the further away the fuel valve 48 is positioned with respect to the pre-chamber 26, the lower the temperature impact from combustion in the pre-chamber 26 (and the main combustion chamber) onto the fuel valve 48. To further reduce the temperature impact onto the fuel valve 48, the same may be arranged away from the pre-chamber 26 in a direction of the first longitudinal axis A (away from the pre-chamber cap 14).

In the shown embodiment, the fuel valve 48 is arranged in the distance s to the pre-chamber 26 being more than six times the maximum height h of the pre-chamber 26 (see Figs. 1 and 2). The fuel valve 48 is provided in the rear housing portion 20 in a region having a maximum temperature being considerably lower than maximum temperature of the pre-chamber 26 and the tip housing portion 16. As noted above, a temperature in a region of the fuel valve 48 may be up to 90°C only, whereas the temperature in a region of the tip housing portion 16 may be between 300° and 400°C during operation.

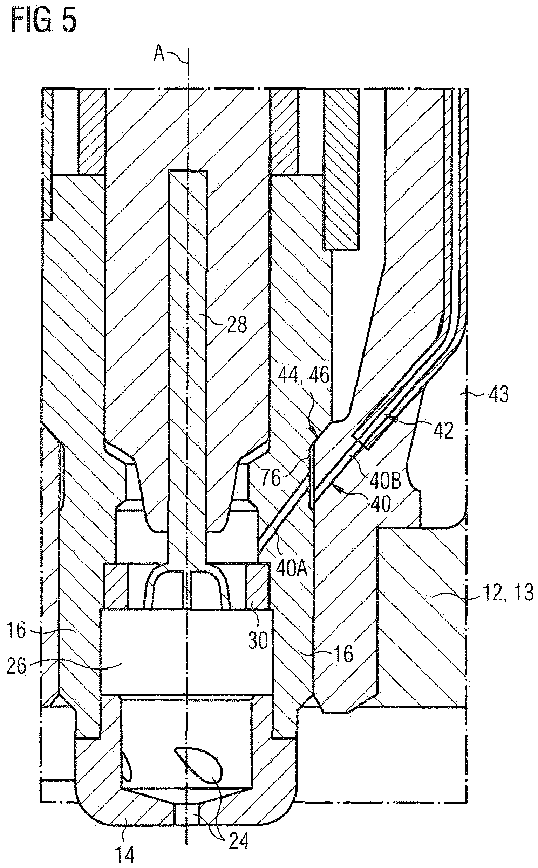

In some embodiments (not shown in the Figs.), the fuel valve 48 may be disposed in a rear section of the mounting sleeve 22, and the first fuel supply channel 40 (together with the capillary tube 42) may extend at least partially through the mounting sleeve 22. Such an arrangement may further facilitate to provide the first fuel supply channel 40 and/or the capillary tube 42 radially outside of the mounting sleeve 22 with respect to the first longitudinal axis A as depicted in Fig. 5.

Similarly, the fuel supply ring channel 56 and/or the further fuel supply ring channel 66 may be arranged in a distance to the pre-chamber 26, the distance being be at least three times, particularly four times, the maximum height h (see Figs. 1 and 2) of the pre-chamber 26 measured along the first longitudinal axis A. For example, said distance may be substantially equal to the distance s (see Fig. 1). In the shown embodiment, the fuel supply ring channels 56 and 66 are arranged in a distance to the pre-chamber 26 being more than six times the maximum height h of the pre-chamber 26 (see Figs. 1 and 2).

In Fig. 5, a tip region of a second embodiment of the pre-chamber spark plug 10 of a second embodiment is shown. The second embodiment may be substantially similar to the first embodiment except the features described below.

Here, the capillary tube 42 extends radially outside of the mounting sleeve 22. Such an arrangement of the capillary tube 42 allows to provide the capillary tube 42 to extend through a cooling chamber 43 of the cylinder head 12 being filled with cooling water such that the capillary tube 42 is cooled by cooling water flowing around the same.

In the embodiment of Fig. 5, the first fuel supply channel 40 partially extends through the tip housing portion 16 as a first section 40A, and partially extends through the mounting sleeve 22 as a second section 40B. The first section 40A fluidly interconnects the pre-chamber 26 and a fuel supply ring channel 76 circumferentially extending about the first longitudinal axis A between an outer circumferential face 78 of the tip housing portion 16 and an inner circumferential face 80 of the mounting sleeve 22. The second section 40B of the first fuel supply channel 40 opens in the fuel supply ring channel 76. The fuel supply ring channel 76 may be fluidly sealed by the conical seat 44, 46.

### Industrial Applicability

The pre-chamber spark plug 10 as exemplary disclosed herein is particularly applicable in gaseous fuel internal combustion engine operating on a lean mixture of gaseous fuel and air. Ignition of the lean mixture is enabled by enriching the pre-chamber with gaseous fuel from the first fuel supply channel 40. However, as one skilled in the art will appreciate, the pre-chamber spark plug 10 may be applicable in other engines as well, for example dual fuel engines running having separate operating modes for diesel fuel and gaseous fuel.

Terms such as "about", "around", "approximately", or "substantially" as used herein when referring to a measurable value such as a parameter, an amount, a temporal duration, and the like, is meant to encompass variations of +/-10% or less, preferably +1-5% or less, more preferably +1/-1% or less, and still more preferably +1/-0.1 % or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A pre-chamber spark plug (10) for a gaseous fuel internal combustion engine, the pre-chamber spark plug (10) extending along a first longitudinal axis (A) and comprising:
a pre-chamber (26) having a maximum pre-chamber height (h) measured along the first longitudinal axis (A);
a fuel valve (48) arranged in a distance (s) to the pre-chamber (26), the distance (s) being at least three times greater than the maximum pre-chamber height (h);
a first fuel supply channel (40) fluidly connecting the fuel valve (48) and the pre-chamber (26);
a tip housing portion (16) including the pre-chamber (26);
a rear housing portion (20), the first longitudinal axis (A) extending from the tip housing portion (16) to the rear housing portion (20);
**characterized in that** it further comprises
a mounting sleeve (22) extending circumferentially about the first longitudinal axis (A) from the tip housing portion (16) to the rear housing portion (20).

2. The pre-chamber spark plug (10) of claim 1, wherein the fuel valve (48) is disposed in the rear housing portion (20).

3. The pre-chamber spark plug (10) of claim 1 ,wherein the fuel valve (48) is disposed in the mounting sleeve (22).

4. The pre-chamber spark plug (10) of any one of the preceding claims, wherein:
the tip housing portion (16) is sealed against the mounting sleeve (22) via a conical seat (44, 46) or a flat seat; and/or
the rear housing portion (20) is secured in the mounting sleeve (22) via an external thread section (36) of the rear housing portion (20) and an internal thread section (38) of the mounting sleeve (22).

5. The pre-chamber spark plug (10) of any one of the preceding claims, wherein the first fuel supply channel (40) includes a capillary tube (42).

6. The pre-chamber spark plug (10) of any one of the preceding claims, wherein the first fuel supply channel (40) at least partially extends through the mounting sleeve (22) of the pre-chamber spark plug (10).

7. The pre-chamber spark plug (10) of any one of the preceding claims, wherein the first fuel supply channel (40) at least partially extends radially outside of the mounting sleeve (22) of the pre-chamber spark plug (10), with respect to the first longitudinally axis (A).

8. The pre-chamber spark plug (10) of any one of the preceding claims, wherein the fuel valve (48) is configured as a check valve.

9. The pre-chamber spark plug (10) of any one of the preceding claims, further comprising a fuel valve reception (50) accommodating the fuel valve (48) and extending along a second longitudinal axis (B) being non-parallel to the first longitudinal axis (A).

10. The pre-chamber spark plug (10) of claim 9, wherein the second longitudinal axis (B) and the first longitudinal axis (A) run inclined or as skew lines with respect to each other.

11. The pre-chamber spark plug (10) of claim 9 or claim 10, wherein the second longitudinal axis (B) lies in a plane substantially perpendicular to the first longitudinal axis (A).

12. The pre-chamber spark plug (10) of any one of the preceding claims, wherein the mounting sleeve (22) of the pre-chamber spark plug (10) includes a second fuel supply channel (52), and the first fuel supply channel (40) and the second fuel supply channel (52) are fluidly interconnected via a first fuel supply ring channel (66) extending circumferentially about the first longitudinal axis (A).

13. The pre-chamber spark plug (10) of claim 12, wherein the first fuel supply ring channel (66) is disposed between the mounting sleeve (22) and the rear housing portion (20) of the pre-chamber spark plug (10).

14. The pre-chamber spark plug (10) of any one of claim 2 to 13, further comprising an intermediate housing portion (18) connecting the tip housing portion (16) and the rear housing portion (20).

15. A cylinder head (12) for a gaseous fuel internal combustion engine, the cylinder head (12) including:
a cylinder head body (13) accommodating a pre-chamber spark plug (10) according to any one of the preceding claims, and
a third fuel supply channel (54) extending through the cylinder head body (13) to a second fuel supply ring channel (56) disposed between the cylinder head body (13) and the pre-chamber spark plug (10).

## Patentansprüche

1. Vorkammerzündkerze (10) für eine Brennkraftmaschine mit gasförmigem Brennstoff, wobei sich die Vorkammerzündkerze (10) entlang einer ersten Längsachse (A) erstreckt und umfasst:
eine Vorkammer (26) mit einer maximalen Vorkammerhöhe (h), gemessen entlang der ersten Längsachse (A);
ein Brennstoffventil (48), das in einem Abstand (s) zu der Vorkammer (26) angeordnet ist, wobei der Abstand (s) mindestens dreimal größer als die maximale Vorkammerhöhe (h) ist;
einen ersten Kraftstoffzufuhrkanal (40), der das Kraftstoffventil (48) und die Vorkammer (26) fließend verbindet;
ein Spitzengehäuseabschnitt (16) einschließlich der Vorkammer (26);
einen hinteren Gehäuseabschnitt (20), wobei sich die erste Längsachse (A) von dem Spitzengehäuseabschnitt (16) zu dem hinteren Gehäuseabschnitt (20) erstreckt;
**dadurch gekennzeichnet, dass** es ferner umfasst:
eine Montagehülse (22), die sich umlaufend um die erste Längsachse (A) von dem Spitzengehäuseabschnitt (16) zu dem hinteren Gehäuseabschnitt (20) erstreckt.

2. Vorkammerzündkerze (10) nach Anspruch 1, wobei das Kraftstoffventil (48) in dem hinteren Gehäuseabschnitt (20) angeordnet ist.

3. Vorkammerzündkerze (10) nach Anspruch 1, wobei das Kraftstoffventil (48) in der Montagehülse (22) angeordnet ist.

4. Vorkammerzündkerze (10) nach einem der vorstehenden Ansprüche, wobei:
der Spitzengehäuseabschnitt (16) über einen konischen Sitz (44, 46) oder einen flachen Sitz gegen die Montagehülse (22) abgedichtet ist; und/oder
der hintere Gehäuseabschnitt (20) über einen Außengewindeabschnitt (36) des hinteren Gehäuseabschnitts (20) und einen Innengewindeabschnitt (38) der Montagehülse (22) in der Montagehülse (22) befestigt ist.

5. Vorkammerzündkerze (10) nach einem der vorstehenden Ansprüche, wobei der erste Kraftstoffzufuhrkanal (40) ein Kapillarrohr (42) einschließt.

6. Vorkammerzündkerze (10) nach einem der vorstehenden Ansprüche, wobei sich der erste Kraftstoffzufuhrkanal (40) mindestens teilweise durch die Montagehülse (22) der Vorkammerzündkerze (10) erstreckt.

7. Vorkammerzündkerze (10) nach einem der vorstehenden Ansprüche, wobei sich der erste Kraftstoffzufuhrkanal (40) mindestens teilweise radial außerhalb der Montagehülse (22) der Vorkammerzündkerze (10), bezogen auf die erste Längsachse (A), erstreckt.

8. Vorkammerzündkerze (10) nach einem der vorstehenden Ansprüche, wobei das Kraftstoffventil (48) als Rückschlagventil konfiguriert ist.

9. Vorkammerzündkerze (10) nach einem der vorstehenden Ansprüche, ferner umfassend eine Kraftstoffventilaufnahme (50), die das Kraftstoffventil (48) aufnimmt und sich entlang einer zweiten Längsachse (B), die nicht parallel zur ersten Längsachse (A) ist, erstreckt.

10. Vorkammerzündkerze (10) nach Anspruch 9, wobei die zweite Längsachse (B) und die erste Längsachse (A) geneigt oder als Schräglinien zueinander verlaufen.

11. Vorkammerzündkerze (10) nach Anspruch 9 oder 10, wobei die zweite Längsachse (B) in einer zur ersten Längsachse (A) im Wesentlichen senkrechten Ebene liegt.

12. Vorkammerzündkerze (10) nach einem der vorstehenden Ansprüche, wobei die Montagehülse (22) der Vorkammerzündkerze (10) einen zweiten Kraftstoffzufuhrkanal (52) einschließt und der erste Kraftstoffzufuhrkanal (40) und der zweite Kraftstoffzufuhrkanal (52) über einen ersten Kraftstoffzufuhr-Ringkanal (66), der sich umlaufend um die erste Längsachse (A) erstreckt, fließend miteinander verbunden sind.

13. Vorkammerzündkerze (10) nach Anspruch 12, wobei der erste Kraftstoffzufuhr-Ringkanal (66) zwischen der Montagehülse (22) und dem hinteren Gehäuseabschnitt (20) der Vorkammerzündkerze (10) angeordnet ist.

14. Vorkammerzündkerze (10) nach einem der Ansprüche 2 bis 13, ferner umfassend einen Zwischengehäuseabschnitt (18), der den Spitzengehäuseabschnitt (16) und den hinteren Gehäuseabschnitt (20) verbindet.

15. Zylinderkopf (12) für eine Brennkraftmaschine mit gasförmigem Brennstoff, wobei der Zylinderkopf (12) einschließt:
einen Zylinderkopfkörper (13), der eine Vorkammerzündkerze (10) nach einem der vorstehenden Ansprüche aufnimmt, und
einen dritten Kraftstoffzufuhrkanal (54), der sich durch den Zylinderkopfkörper (13) zu einem zweiten Kraftstoffzufuhr-Ringkanal (56) erstreckt, der zwischen dem Zylinderkopfkörper (13) und der Vorkammerzündkerze (10) angeordnet ist.

## Revendications

1. Bougie d'allumage de préchambre (10) pour moteur à combustion interne à carburant gazeux, la bougie d'allumage de préchambre (10) s'étendant le long d'un premier axe longitudinal (A) et comprenant :
une préchambre (26) ayant une hauteur maximale de préchambre (h) mesurée le long du premier axe longitudinal (A) ;
une soupape de carburant (48) disposée à une certaine distance (s) de la préchambre (26), la distance (s) étant au moins trois fois supérieure à la hauteur maximale de préchambre (h) ;
un premier canal d'alimentation en carburant (40) reliant de manière fluidique la soupape de carburant (48) et la préchambre (26) ;
une partie de logement d'extrémité (16) incluant la préchambre (26) ;
une partie de logement arrière (20), le premier axe longitudinal (A) s'étendant de la partie de logement d'extrémité (16) à la partie de logement arrière (20) ;
**caractérisée en ce qu'**elle comprend en outre :
un manchon de montage (22) s'étendant circonférentiellement autour du premier axe longitudinal (A) de la partie de logement d'extrémité (16) à la partie de logement arrière (20).

2. Bougie d'allumage de préchambre (10) selon la revendication 1, dans laquelle la soupape de carburant (48) est disposée dans la partie de logement arrière (20).

3. Bougie d'allumage de préchambre (10) selon la revendication 1, dans laquelle la soupape de carburant (48) est disposée dans le manchon de montage (22).

4. Bougie d'allumage de préchambre (10) selon l'une quelconque des revendications précédentes, dans laquelle :
la partie de logement d'extrémité (16) est scellée contre le manchon de montage (22) par l'intermédiaire d'un siège conique (44, 46) ou d'un siège plat ; et/ou
la partie de logement arrière (20) est fixée dans le manchon de montage (22) par l'intermédiaire d'une section de filetage externe (36) de la partie de logement arrière (20) et d'une section de filetage interne (38) du manchon de montage (22).

5. Bougie d'allumage de préchambre (10) selon l'une quelconque des revendications précédentes, dans laquelle le premier canal d'alimentation en carburant (40) inclut un tube capillaire (42).

6. Bougie d'allumage de préchambre (10) selon l'une quelconque des revendications précédentes, dans laquelle le premier canal d'alimentation en carburant (40) s'étend au moins partiellement à travers le manchon de montage (22) de la bougie d'allumage de préchambre (10).

7. Bougie d'allumage de préchambre (10) selon l'une quelconque des revendications précédentes, dans laquelle le premier canal d'alimentation en carburant (40) s'étend au moins partiellement radialement à l'extérieur du manchon de montage (22) de la bougie d'allumage de préchambre (10), par rapport au premier axe longitudinal (A).

8. Bougie d'allumage de préchambre (10) selon l'une quelconque des revendications précédentes, dans laquelle la soupape de carburant (48) est configurée comme un clapet de non-retour.

9. Bougie d'allumage de préchambre (10) selon l'une quelconque des revendications précédentes, comprenant en outre une réception de soupape de carburant (50) recevant la soupape de carburant (48) et s'étendant le long d'un second axe longitudinal (B) qui n'est pas parallèle au premier axe longitudinal (A).

10. Bougie d'allumage de préchambre (10) selon la revendication 9, dans laquelle le second axe longitudinal (B) et le premier axe longitudinal (A) sont disposés inclinés ou sous forme de lignes obliques l'un par rapport à l'autre.

11. Bougie d'allumage de préchambre (10) selon la revendication 9 ou la revendication 10, dans laquelle le second axe longitudinal (B) se situe dans un plan sensiblement perpendiculaire au premier axe longitudinal (A).

12. Bougie d'allumage de préchambre (10) selon l'une quelconque des revendications précédentes, dans laquelle le manchon de montage (22) de la bougie d'allumage de préchambre (10) inclut un deuxième canal d'alimentation en carburant (52), et le premier canal d'alimentation en carburant (40) et le deuxième canal d'alimentation en carburant (52) sont interconnectés de manière fluidique par l'intermédiaire d'un premier canal annulaire d'alimentation en carburant (66) s'étendant circonférentiellement autour du premier axe longitudinal (A).

13. Bougie d'allumage de préchambre (10) selon la revendication 12, dans laquelle le premier canal annulaire d'alimentation en carburant (66) est disposé entre le manchon de montage (22) et la partie de logement arrière (20) de la bougie d'allumage de préchambre (10).

14. Bougie d'allumage de préchambre (10) selon l'une quelconque des revendications 2 à 13, comprenant en outre une partie de logement intermédiaire (18) reliant la partie de logement d'extrémité (16) et la partie de logement arrière (20).

15. Culasse (12) pour un moteur à combustion interne à carburant gazeux, la culasse (12) incluant :
un corps de culasse (13) recevant une bougie d'allumage de préchambre (10) selon l'une quelconque des revendications précédentes, et
un troisième canal d'alimentation en carburant (54) s'étendant à travers le corps de culasse (13) jusqu'à un deuxième canal annulaire d'alimentation en carburant (56) disposé entre le corps de culasse (13) et la bougie d'allumage de préchambre (10).
